(19) Europäisches Patentamt

European Patent Office

Office européen des brevets

(11) **EP 1 404 957 B1**

(12) **EUROPÄISCHE PATENTSCHRIFT**

(45) Veröffentlichungstag und Bekanntmachung des Hinweises auf die Patenterteilung:
**17.11.2004 Patentblatt 2004/47**

(21) Anmeldenummer: 02742802.8

(22) Anmeldetag: **11.06.2002**

(51) Int Cl.$^7$: **F02D 11/10**, G01D 5/12

(86) Internationale Anmeldenummer:
**PCT/DE2002/002129**

(87) Internationale Veröffentlichungsnummer:
**WO 2003/006805 (23.01.2003 Gazette 2003/04)**

(54) **VERFAHREN ZUR BERÜHRUNGSLOSEN ERFASSUNG DER POSITION EINER DROSSELKLAPPENWELLE EINES DROSSELKLAPPENSTUTZENS UND DROSSELKLAPPENSTUTZEN**

METHOD FOR THE CONTACTLESS DETECTION OF THE POSITION OF A BUTTERFLY-VALVE SHAFT OF A BUTTERFLY-VALVE CONNECTING PIECE AND A BUTTERFLY-VALVE CONNECTING PIECE

PROCEDE DE DETECTION SANS CONTACT DE LA POSITION D'UN AXE DE VOLET DE REGLAGE D'UN SUPPORT DE VOLET DE REGLAGE, ET SUPPORT DE VOLET DE REGLAGE Y RELATIF

(84) Benannte Vertragsstaaten:
**DE FR IT**

(30) Priorität: **11.07.2001 DE 10133631**

(43) Veröffentlichungstag der Anmeldung:
**07.04.2004 Patentblatt 2004/15**

(73) Patentinhaber: **SIEMENS AKTIENGESELLSCHAFT 80333 München (DE)**

(72) Erfinder: **WIESE, Peter 65779 Kelkheim (DE)**

(56) Entgegenhaltungen:
**EP-A- 0 859 139          EP-A- 1 002 943
DE-A- 19 619 755          US-A- 5 624 100**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zur berührungslosen Erfassung der Position einer Drosselklappenwelle eines Drosselklappenstutzens, wobei der Drosselklappenstutzen ein von einem Deckel verschließbares Gehäuse und eine in dem Gehäuse angeordnete Drosselöffnung für eine auf der Drosselklappenwelle angeordnete Drosselklappe aufweist, wobei die Drosselklappenwelle von einem elektrischen Stellantrieb antreibbar ist und an ihrem einen Ende einen Magneten aufweist, der in einer Flucht berührungslos zu einem an dem Deckel angeordneten Sensor angeordnet ist. Sie bezieht sich weiterhin auf einen Drosselklappenstutzen mit einem von einem Deckel verschließbaren Gehäuse und mit einer in dem Gehäuse angeordneten Drosselöffnung für eine auf einer Drosselklappenwelle angeordnete Drosselklappe, wobei die Drosselklappenwelle von einem elektrischen Stellantrieb antreibbar ist und an ihrem einen Ende einen Magneten aufweist, der in einer Flucht berührungslos zu einem an dem Deckel angeordneten Sensor angeordnet ist.

Zur Steuerung der Frischgasmenge eines Kraftfahrzeugs werden üblicherweise Drosselklappenstutzen eingesetzt. Drosselklappenstutzen umfassen ein Gehäuse mit einer Drosselöffnung und ein in der Drosselöffnung angeordnetes Drosselorgan. Das Drosselorgan umfasst üblicherweise eine auf einer Drosselklappenwelle angeordnete Drosselklappe, die schwenkbar in dem Gehäuse des Drosselklappenstutzens angeordnet ist. Die Drosselklappe nimmt für den Durchlass einer bestimmten Frischgasmenge eine bestimmte Stellung in der Drosselöffnung ein. Hierzu ist die Drosselklappenwelle mechanisch oder elektromechanisch ansteuerbar.

Bei einer elektromechanischen Ansteuerung der Drosselklappenwelle weist üblicherweise der Drosselklappenstutzen eine Positionserfassungseinrichtung auf, über die die jeweils aktuelle Position der Drosselklappenwelle erfassbar ist. In Abhängigkeit von der jeweils aktuellen Position der Drosselklappenwelle wird dann entweder innerhalb oder außerhalb des Drosselklappenstutzens ein Signal erzeugt, mit dem die Drosselklappenwelle über den in dem Drosselklappenstutzen angeordneten Stellantrieb ansteuerbar ist.

Bei diesen Positionserfassungseinrichtungen unterscheidet man zwischen solchen, bei denen zur Erfassung der jeweils aktuellen Position der Drosselklappenwelle eine Berührung der Drosselklappenwelle zumindest indirekt erforderlich ist und andererseits berührungsfreien Positionserfassungseinrichtungen. Ein nicht berührungsfreier Positionserfassungssensor ist ein Potentiometer, bei dem ein an die Drehbewegung der Drosselklappenwelle gekoppelter Schleifkontakt bei einer Drehbewegung der Drosselklappenwelle einen Weg entlang einer Kontaktfläche zurücklegt, wobei der von dem Schleifkontakt zurückgelegte Weg ein Maß für die Drehbewegung der Drosselklappenwelle ist. Derartige Potentiometer unterliegen einem bestimmten Verschleiß, der durch die mechanische Abnutzung zwischen dem Schleifkontakt und der Kontaktbahn maßgeblich bestimmt ist.

Um mechanischen Verschleiß von nichtberührungsfreien Positionserfassungseinrichtungen zuverlässig zu vermeiden, sind Drosselklappenstutzen entwickelt worden, bei denen die Erfassung der Drehbewegung der Drosselklappenwelle berührungsfrei durchführbar ist. Ein Beispiel für einen derartigen berührungsfreien Sensor ist ein Hall-Sensor, der in einer Flucht zu einem an der Drosselklappenwelle angeordneten Ringmagneten positioniert ist. Dieser Hall-Sensor liefert ein Signal, welches der magnetischen Induktion B proportional ist, die durch das Magnetfeld des Ringmagneten erzeugt wird. Der Ringmagnet umfasst dabei üblicherweise einen äußeren Abschirmring und im Inneren zwei Flussleitstücke, die annähernd parallel angeordnet sind. In dem Spalt der beiden Flussleitstücke befindet sich dann der Hall-Sensor. Dieses Prinzip ist gut gegen magnetische Störfelder geschützt, da diese durch den äußeren Abschirmring vom Hall-Sensor ferngehalten werden. Der lineare nutzbare Messbereich ist bei diesem Prinzip jedoch auf etwa 2 mal 75° beschränkt. Daher kann also zur Erfassung des typischen Drosselklappenarbeitsbereichs der magnetische Nullpunkt nicht in den mechanischen Leerlaufanschlag (Drosselklappe verschließt annähernd vollständig die Drosselöffnung) gelegt werden und läge damit außerhalb der Leerlaufposition der Drosselklappe. Da aber im magnetischen Nullpunkt die Messgenauigkeit am höchsten ist und mit zunehmender Entfernung vom magnetischen Nullpunkt abnimmt, wäre dann die Messgenauigkeit im Leerlaufbereich der Drosselklappe geringer als in einem Bereich, der zwischen dem Leerlauf- und dem Vollastbereich angeordnet ist. Dies entspricht nicht den üblichen Genauigkeitsanforderungen an eine berührungslose Positionserfassungseinrichtung für eine Drosselklappenwelle eines Drosselklappenstutzens, bei der die Messgenauigkeit im Leerlauf am höchsten sein soll.

Alternativ kann der Hall-Sensor senkrecht in ein paralleles Feld hineinragen, welches zwischen zwei über ein Joch verbundenen Magnetquadern ausgebildet ist, wobei die Magnetquader fest mit der Drosselklappenwelle verbunden sind. Dieses Prinzip ist aus der JP 8 068 606 A bekannt. Die notwendige Signalverstärkung erfolgt hier in einer Auswerteelektronik, die mit dem Hall-Sensor über ein Stanzgitter verbunden ist. Die elektrische Schnittstelle nach außen wird dabei ebenfalls über ein Stanzgitter oder auch Leadframe hergestellt, welches an seinen Enden zu Steckerkontakten ausgebildet ist. Bei diesem Prinzip wird in einem Winkelbereich von etwa +/- 45° um den Nulldurchgang herum auf eine Linearisierung verzichtet, was mit Zugeständnissen an die Linearität einhergeht. Bei üblichen Arbeitswinkeln von weniger als 90° ist theoretisch eine Detektion der Drosselklappenstellung möglich, sofern der Nulldurchgang in die Messbereichsmitte gelegt wird. Dann läge jedoch der Leerlaufbereich in einem Messbereich, in dem der Linearitätsfehler exzessiv ansteigt, denn die Genauigkeit eines Hall-Sensors ist gerade um den Nulldurchgang der Induktion herum am höchsten. Bei maximaler Ansteuerung im Bereich von +/- 45°, also Vollast und Leerlauf, würden die maximalen Fehler auftreten, da dann Temperaturdrift und Alterungseffekte zum.Tragen kommen. Hingegen wäre im Zwischenbereich die Messgenauigkeit am höchsten. Eine für einen Drosselklappenstutzen vorgesehene Positionserfassungseinrichtung sollte jedoch gerade bei kleinen Öffnungswinkeln der Drosselklappe und damit besonders kleinen Drehbewegungen der Drosselklappenwelle besonders hoch sein. Daher ist diese Anwendung für eine Positionserfassungseinrichtung einer Drosselklappenwelle nicht besonders gut geeignet. Zudem sind mit diesem letztgenannten Prinzip die üblicherweise erforderlichen Genauigkeiten auch bei besonders langen Btriebszeiten in der Regel nicht zu erreichen. Nachteilig erweist sich außerdem, dass die offenen Seiten des annähernd U-förmigen Jochs offen für magnetische Störfelder sind, und somit die Gefahr besteht, dass das Sensorsignal von außen verfälscht wird.

Alternativ zu einem Hall-Sensor kann in einer berührungsfreien Positionserfassungseinrichtung für eine Drehbewegung einer Drosselklappenwelle ein magnetoresistiver Sensor, im folgenden mit MR-Sensor bezeichnet, verwendet werden. Der MR-Sensor braucht ein Feld, welches sich in der Ebene, welche durch die Sensorstruktur ausgebildet ist, dreht. Hierzu ist es erforderlich, dass das Sensorelement senkrecht zur Welle und damit nicht in einer Ebene parallel zur Drehachse der Welle angeordnet wird. Da die Ausgangskennlinie von MR-Sensoren mit 180° periodisch ist, beschränkt sich der linear nutzbare Winkelbereich auf annähernd 45°. Daher weist auch üblicherweise ein MR-Sensor nicht den für die Erfassung einer Drehbewegung der Drosselklappenwelle erforderlichen Winkelbereich von annähernd 90° auf.

Der Erfindung liegt daher die Aufgabe zugrunde, ein Verfahren der oben genannten Art anzugeben, mit dem zuverlässig auch über besonders lange Zeiträume hinweg mittels einer berührungslosen Positionserfassungseinrichtung die Position der Drosselklappenwelle des Drosselklappenstutzens in einem Erfassungsbereich von annähernd 90° erfassbar ist. Zudem soll eine für das Verfahren geeignete Vorrichtung angegeben werden.

Diese Aufgabe wird erfindungsgemäß dadurch gelöst, dass der Sensor ein erstes magnetoresistives Sensorelement und ein zweites magnetoresistives Sensorelement aufweist, wobei mittels des Magneten bei einer Drehbewegung der Drosselklappenwelle in dem ersten magnetoresistiven Sensorelement ein annähernd sinusförmiges Signal und in dem zweiten magnetoresistiven Sensorelement ein annähernd cosinusförmiges Signal erzeugt wird, wobei das erste annähernd sinusförmige Signal und das zweite annähernd cosinusförmige Signal einer in dem Sensor angeordneten Auswerteelektronik zugeführt werden, wobei in der Auswerteelektronik aus dem annähernd sinusförmigen Signal des ersten magnetoresistiven Sensorelements und dem annähernd cosinusförmigen Signal des zweiten magnetoresistiven Sensorelements ein annähernd arcustangensförmiges Signal erzeugt wird, wobei das annähernd arcustangensförmige Signal einer außerhalb des Gehäuses angeordneten Steuereinheit zugeführt wird, wobei in Abhängigkeit von dem annähernd arcustangensförmigen Signal in der Steuereinheit ein Steuersignal erzeugt wird und das Steuersignal dem in dem Drosselklappenstutzen angeordneten Stellantrieb zur Verstellung der Drosselklappenwelle zugeführt wird.

Die Erfindung geht dabei von der Überlegung aus, dass ein Verfahren, das eine Erfassung einer Drehbewegung einer Drosselklappenwelle von annähernd 90° auch über besonders lange Zeiträume hinweg besonders zuverlässig gewährleistet, berührungslos die jeweils aktuelle Position der Drosselklappenwelle erfassen sollte. Dies ist mittels eines Sensors möglich, der ein magnetoresistives Sensorelement umfasst. Dieses magnetoresistive Sensorelement weist jedoch nicht die erforderliche Genauigkeit bei der Erfassung der Position der Drosselklappenwelle auf. Die Genauigkeit der Erfassung lässt sich dadurch erhöhen, dass statt eines einzigen magnetoresistiven Sensorelements, ein zweites magnetoresistives Sensorelement relativ zu dem ersten magnetoresistiven Sensorelement angeordnet wird. Geben nun diese beiden Sensorelemente annähernd das gleiche Signal jedoch phasenverschoben aus, so lässt sich mit Hilfe der vergleichsweise genau bestimmbaren Phasenverschiebung die aktuelle Position der Drosselklappenwelle besonders genau erfassen. Hierzu wird ein erstes und ein zweites magnetoresistives Sensorelement relativ zu einem an der Drosselklappenwelle angeordneten Magneten positioniert, wobei aus dem Signal des ersten magnetoresistiven Sensorelements und aus dem Signal des zweiten magnetoresistiven Sensorelements ein annähernd arcustangensförmiges Signal erzeugbar ist, das in ausreichender Genauigkeit die Position der Drosselklappenwelle charakterisiert. Das annähernd arcustangensförmige Signal ist dabei temperaturunabhängig, wohingegen die Amplituden der Signale des ersten magnetoresistiven Sensorelements und des zweiten magnetoresistiven Sensorelements temperaturabhängig sind.

Vorteilhafterweise wird die Skalierung (Verstärkung, Offset) des Sensors mittels eines zusätzlichen Pins der Auswerteelektronik über ein serielles Protokoll vorgenommen, wobei Daten zur Einstellung der Kennlinie in einem nichtflüchtigen Speicher abgelegt werden. Damit reduziert sich die Anzahl der elektronischen Bauteile auf ein einziges, wobei eine Leiterplatte nicht zwingend erforderlich ist.

Vorteilhafterweise wird das Signal des ersten magnetoresistiven Sensorelements mit dem Signal des zweiten magnetoresistiven Sensorelements plausibilisiert. Erfolgt eine Verletzung einer vorgegebenen Plausibilitätsbedingung, so wird ein Signal ausgegeben, das erkennbar außerhalb des üblichen Arbeitsbereiches liegt. Hierdurch ist eine aus Sicherheitsgründen sonst übliche redundante Ausführung eines ersten und eines zweiten Sensors verzichtbar, wodurch das Verfahren besonders einfach zu handhaben ist.

In Bezug auf den Drosselklappenstutzen wird die Aufgabe erfindungsgemäß dadurch gelöst, dass der Magnet annähernd ringförmig ausgebildet ist und der Sensor ein erstes magnetoresistives Sensorelement und ein zweites magnetoresistives Sensorelement aufweist, so dass mittels des Magneten bei einer Drehbewegung der Drosselklappenwelle in dem ersten magnetoresistiven Sensorelement ein annähernd sinusförmiges Signal und in dem zweiten magnetoresistiven Sensorelement ein annähernd cosinusförmiges Signal erzeugt wird und dass die beiden Sensorelemente zur Erzeugung eines annähernd arcustangensförmigen Signals mit einer Auswerteelektronik verbunden sind und dass die Auswerteelektronik zur Erzeugung eines Steuersignals für den Stellantrieb mit einer außerhalb des Gehäuses angeordneten Steuereinheit Verbindung hat.

Durch die beiden magnetoresistiven Sensorelemente ergibt sich bei der Erfassung der Position der Drosselklappenwelle eine hohe Genauigkeit. Geben diese beiden Sensorelemente annähernd das gleiche Signal jedoch phasenverschoben aus, so lässt sich mit Hilfe der vergleichsweise genau bestimmbaren Phasenverschiebung die aktuelle Position der Drosselklappenwelle besonders genau erfassen. Mittels der beiden magnetoresistiven Sensorelemente lassen sich zwei Kennlinien erzeugen, die, sofern die Kennlinien phasenverschoben sind, gemäß dem oben beschriebenen Verfahren dafür einsetzbar sind, die Drehbewegung der Drosselklappenwelle besonders genau zu erfassen.

Von Vorteil ist es, wenn der Magnet eine diametrale Magnetisierung aufweist. Hierdurch ergibt sich ein homogeneres Feld, wodurch größere Exzentrizitäten zwischen Sensorkopf und Magnetachse zulässig sind, ohne dass dies zu einem unzulässigen Linearitätsfehler führt. Hierdurch lässt sich das oben genannte Verfahren auch bei konstruktiv nicht vermeidbaren Ungenauigkeiten in der Positionierung zwischen dem Magneten und dem Sensor besonders zuverlässig durchführen.

Alternativ umfasst der Magnet ein erstes Ringteilsegment und ein zweites Ringteilsegment, wobei sowohl das erste Ringteilsegment als auch das zweite Ringteilsegment radial magnetisiert sind. Die radiale Magnetisierung bedingt ein im Vergleich zur diametralen Magnetisierung inhomogeneres Feld, wobei die Feldlinien des Magnetfeldes im Zentrum des Magneten fokussiert werden. Daher lassen sich mittels einer radialen Magnetisierung des Magneten besonders hohe Felder erzeugen, wodurch die Positionserfassungseinrichtung besonders unanfällig gegen Störfelder ist.

Vorteilhafterweise ragt bei beiden Ausführungen der Sensor axial mittig in den Magneten hinein. Ragt der Sensor axial mittig in den Magneten hinein, so ist in dieser Position die Amplitude des Nutzfeldes besonders groß und auch die Schirmwirkung gegen äußere Störfelder ist besonders gut ausgenutzt. Hierdurch ist auch in der unmittelbaren Nähe des elektromagnetischen Antriebs die Winkelstellung der Welle störungsfrei ermittelbar.

Vorteilhafterweise umfasst der Sensor ein erstes Gehäuse und ein zweites Gehäuse, wobei in dem ersten Gehäuse das erste magnetoresistive Sensorelement sowie das zweite magnetoresistive Sensorelement und in dem zweiten Gehäuse eine Auswerteelektronik angeordnet ist, wobei das erste Gehäuse annähernd senkrecht zu der Drosselklappenwelle und das zweite Gehäuse annähernd parallel zu der Drosselklappenwelle angeordnet ist. Hierdurch weist der für den Sensor erforderliche Bauraum ein besonders geringes Maß auf.

Vorteilhafterweise umfasst die Auswerteelektronik zur Einstellung der Kennlinie über ein serielles Protokoll einen Pin. Hierdurch sind eine Vielzahl von elektrischen Bauelementen verzichtbar, die sonst alternativ zur Einstellung der Kennlinie erforderlich wären.

Vorteilhafterweise ist der Sensor annähernd vollständig von einer Hülle aus Kunststoff umgeben. Derart ausgebildet, bildet der Sensor einen Vorspritzling, der bei der Herstellung des Deckels von Kunststoff umspritzt wird, wodurch der Deckel des Gehäuses des Drosselklappenstutzens gefertigt wird.

Vorteilhafterweise ist der Deckel des Gehäuses aus Kunststoff, wobei der Sensor von dem Kunststoff des Deckels zumindest teilweise umschlossen ist. Durch die Integration des Sensors in den Deckel ist der Sensor an einer fest vorgegebenen Stelle in den Deckel integrierbar. Gleichzeitig entfällt der Montageschritt, bei dem der Sensor in dem Deckel anzuordnen und relativ zu dem Magneten zu justieren ist.

Die mit der Erfindung erzielten Vorteile bestehen insbesondere darin, dass das Verfahren zur Erfassung der Position der Drosselklappenwelle berührungsfrei arbeitet und dabei eine für eine Erfassung der Position der Drosselklappenwelle ausreichende Genauigkeit zuverlässig auch über besonders lange Zeiträume hinweg gewährleistet. Hierbei werden die Signale des ersten Sensorelements und des zweiten Sensorelements gleichzeitig erfasst und auch für eine Plausibilitäskontrolle eingesetzt, die im Falle eines Fehlers ein entsprechendes Signal an die Steuerelektronik übermittelt.

Ein Ausführungsbeispiel der Erfindung wird anhand einer Zeichnung näher erläutert. Darin zeigen

Figur 1    schematisch einen Drosselklappenstutzen mit einem Getriebe und einem Stellantrieb,

Figur 2    schematisch den Deckel des Drosselklappenstutzens gemäß Figur 1,

Figur 3      schematisch einen Drosselklappenstutzen mit einem Direktantrieb und

Figur 4      schematisch den Deckel des Drosselklappenstutzens gemäß Figur 3.

Einander entsprechende Teile sind in allen Figuren mit den gleichen Bezugszeichen versehen.

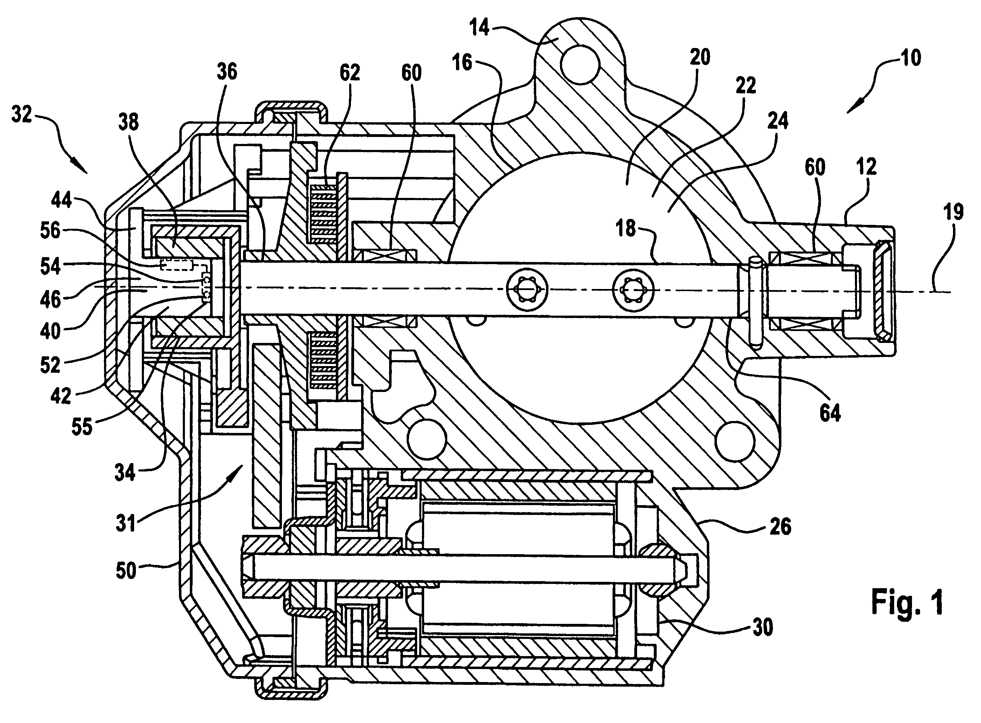

Der Drosselklappenstutzen 10 gemäß Figur 1 dient dazu, einem nicht dargestellten Verbraucher, beispielsweise eine Einspritzeinrichtung eines ebenfalls nicht dargestellten Kraftfahrzeugs, ein Luft- oder Kraftstoff-Luft-Gemisch zuzuführen, wobei mittels des Drosselklappenstutzens 10 die dem Verbraucher zuzuführende Frischgasmenge steuerbar ist. Hierzu weist der Drosselklappenstutzen 10 ein Gehäuse 12 auf, das aus Metall 14 gefertigt ist, das in diesem Ausführungsbeispiel als Aluminium ausgebildet ist. Alternativ kann das Gehäuse 12 jedoch auch aus Kunststoff im Spritzgussverfahren hergestellt worden sein. Das Gehäuse 12 umfasst eine durchgehende Drosselöffnung 16. Über die Drosselöffnung 16 ist dem nicht dargestellten Verbraucher Luft- bzw. ein Kraftstoff-Luft-Gemisch zuführbar.

Zur Einstellung des dem Verbraucher zuzuführenden Volumens an Frischgas ist auf einer Drosselklappenwelle 18 mit einer Drehachse 19 eine Drosselklappe 20 angeordnet. Die Drosselklappe 20 ist aus einem Werkstoff 22 gefertigt, der in diesem Ausführungsbeispiel als Metall 24 ausgebildet ist. Das Metall 24 ist wiederum Aluminium. Alternativ kann die Drosselklappe jedoch auch ganz oder teilweise aus Kunststoff gefertigt sein. Eine Drehung der Drosselklappenwelle 18 bewirkt gleichzeitig eine Verschwenkung der auf der Drosselklappenwelle 18 angeordneten Drosselklappe 20, wodurch der aktive Querschnitt der Drosselöffnung 16 vergrößert oder verkleinert wird. Mittels einer Vergrößerung oder Verkleinerung des aktiven Querschnitts der Drosselöffnung 16 durch die Drosselklappe 20 erfolgt eine Regulierung des Durchsatzes des Luft- bzw. Kraftstoff-Luft-Gemisches durch die Drosselöffnung 16 des Drosselklappenstutzens 10.

Die Drosselklappenwelle 18 kann mit einer nicht näher dargestellten Seilscheibe verbunden sein, die wiederum über einen Bowdenzug mit einer Einstellvorrichtung für eine Leistungsanforderung verbunden ist. Die Einstellvorrichtung kann hierbei als Gaspedal eines Kraftfahrzeugs ausgebildet sein, so dass eine Betätigung dieser Einstellvorrichtung durch den Fahrer des Kraftfahrzeugs die Drosselklappe 20 von einer Stellung minimaler Öffnung, insbesondere einer Schließstellung, bis in eine Stellung maximaler Öffnung, insbesondere einer Offenstellung, gebracht werden kann, um hierdurch die Leistungsabgabe des Kraftfahrzeugs zu steuern.

Die in Figur 1 gezeigte Drosselklappenwelle 18 des Drosselklappenstutzens 10 ist im Gegensatz dazu entweder in einem Teilbereich von einem Stellantrieb und ansonsten über das Gaspedal einstellbar, oder aber die Drosselklappe 20 ist über den gesamten Verstellbereich von einem Stellantrieb einstellbar. Bei diesen sogenannten E-Gas- oder Drive-By-Wire-Systemen wird die mechanische Leistungssteuerung, beispielsweise das Niederdrücken eines Gaspedals, in ein elektrisches Signal umgesetzt. Dieses Signal wird wiederum einer Steuereinheit zugeführt, die ein Ansteuersignal für den Stellantrieb erzeugt. Es gibt bei diesen Systemen im Normalbetrieb keine mechanische Kopplung zwischen dem Gaspedal und der Drosselklappe 20.

Zur Verstellung der Drosselklappenwelle 18 und damit der Drosselklappe 20 weist daher der Drosselklappenstutzen 10 ein Antriebsgehäuse 26 auf. Das Antriebsgehäuse 26 ist einstückig mit dem Gehäuse 12 des Drosselklappenstutzens 10 ausgeführt, das Gehäuse 12 des Drosselklappenstutzens 10 und das Antriebsgehäuse 26 können jedoch auch zweistückig als separate einstückige Baueinheiten ausgebildet sein.

In dem Antriebsgehäuse 26 ist ein über eine außerhalb des Gehäuses 12 angeordnete Steuereinheit 28 ansteuerbarer und als Elektromotor ausgebildeter Stellantrieb 30 angeordnet. Mit der Steuereinheit 28 ist der Stellantrieb 30 in geeigneter Weise elektrisch verbunden, was in der Zeichnung nicht näher dargestellt ist. Die Steuereinheit 28 übermittelt dem als Elektromotor ausgebildeten Stellantrieb 30 ein Steuersignal C, mittels dessen der als Elektromotor ausgebildete Stellantrieb 30 die Drosselklappenwelle 18 über ein Getriebe 31 verstellt. Dabei wird die tatsächliche Position der Drosselklappenwelle 18 über eine Positionserfassungseinrichtung 32 erfasst.

Die Positionserfassungseinrichtung 32 umfasst einen Magneten 34, der auf einem ersten Ende 36 der Drosselklappenwelle 18 angeordnet ist. Der Magnet 34 ist diametral magnetisiert und einteilig als Ring 38 ausgebildet. In einer Flucht mit der Drehachse 19 der Drosselklappenwelle 18 ist im Zentrum 39 des Rings 38 ein Sensor 40 angeordnet. Der Sensor 40 umfasst ein erstes Gehäuse 42 und ein zweites Gehäuse 44. Die beiden Gehäuse 42 und 44 des Sensors 40 sind von Kunststoff 46 umspritzt. Die beiden von Kunststoff 46 ummantelten Gehäuse 42 und 44 wiederum sind in den ebenfalls aus Kunststoff gefertigten Deckel 50 des Drosselklappenstutzens 10 durch Spritzgussverfahren integriert. In dem ersten Gehäuse 42 des Sensors 40 ist ein erstes Sensorelement 52 und ein zweites Sensorelement 54 angeordnet. An dem Gehäuse 42 des Sensors 40 ist außerdem ein Temperatursensor 55 angeordnet. In dem zweiten Gehäuse 44 des Sensors 40 ist eine Auswerteelektronik 56 angeordnet. In besonders platzsparender Weise ragt dabei das erste Gehäuse 42 des Sensors 40 in den Ring 38 des Magneten 34 hinein. Das mit dem ersten Gehäuse 42 des Sensors 40 festverbundene zweite Gehäuse 44 des Sensors 40 ist relativ zu dem ersten Gehäuse 42 des Sensors 40 um 90° abgewinkelt und rechtwinklig zu der Drehachse 19 der Drosselklappenwelle 18 in dem Deckel 50 des Gehäuses 12 des Drosselklappenstutzens 10 angeordnet.

Die Drosselklappenwelle 18 ist in Lagern 60 gelagert, die beidseitig der Drosselöffnung 16 in dem Gehäuse 12 angeordnet sind. Zwischen dem einen Lager 60 und der Positionserfassungseinrichtung 32 ist ein Federsystem 62 mit so genannten Rückstellfedern und/oder Notlauffedern untergebracht ist. Die Rückstellfedern und/oder Notlauffedern des Federsystems 62 bewirken eine Vorspannung der Drosselklappenwelle 18 in Schließrichtung, so dass der als Elektromotor ausgebildete Stellantrieb 30 gegen die Kraft der Rückstellfedern und/oder Notlauffedern arbeitet. Eine so genannte Rückstellfeder und/oder Notlauffeder des Federsystems 62 bewirkt, dass bei einem Ausfall des als Elektromotor ausgebildeten Stellantriebs 30 die Drosselklappe 20 in eine definierte Position gebracht wird, die üblicherweise oberhalb der Leerlaufdrehzahl liegt.

Alternativ oder zusätzlich kann die Drosselklappenwelle 18 auch an dem der Positionserfassungseinrichtung 32 abgewandten Ende 64 der Drosselklappenwelle 18 hinaus aus dem Gehäuse 12 des Drosselklappenstutzens 10 hervorstehen. Dann ist es möglich, beispielsweise eine in der Zeichnung nicht dargestellte Seilscheibe am Ende der Drosselklappenwelle 18 zu montieren, die über einen Bowdenzug mit einem Gaspedal verbunden ist, womit eine mechanische Sollwertvorgabe realisiert wird. Diese mechanische Kopplung der Drosselklappenwelle 18 mit dem in der Zeichnung nicht näher dargestellten Gaspedal kann in Notsituationen, beispielsweise bei einem Ausfall des Stellantriebs, einen Betrieb des Drosselklappenstutzens 10 gewährleisten.

Beim Betrieb des Drosselklappenstutzens 10 wird mittels des als Elektromotor ausgebildeten Stellantriebs 30 die Drosselklappenwelle 18 verschwenkt. Hierdurch gibt die auf der Drosselklappenwelle 18 befestigte Drosselklappe 20 die Drosselöffnung mehr oder weniger frei, wodurch die dem Verbrennungsmotor zuzuführende Frischgasmenge steuerbar ist.

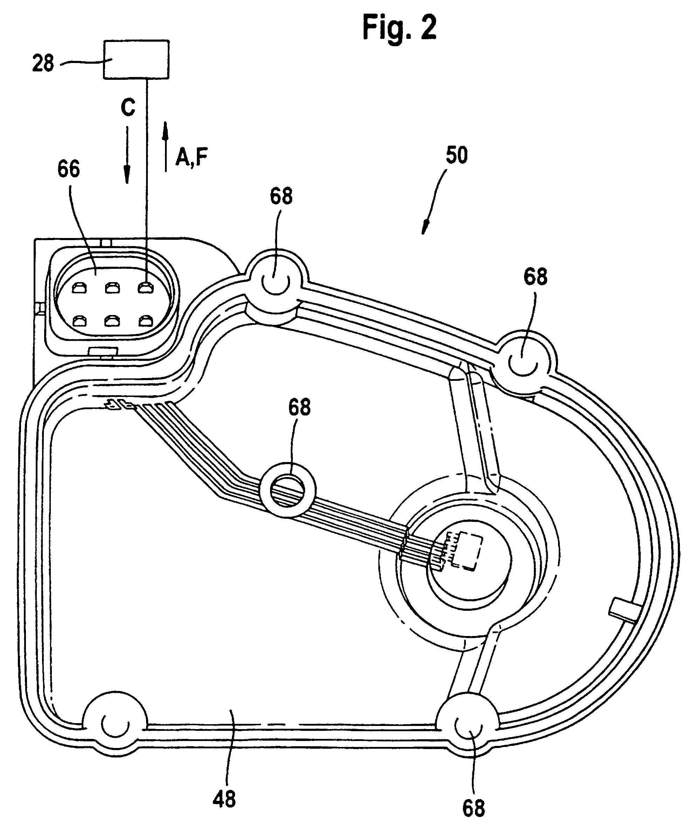

Den Deckel 50 des Gehäuses 12 des Drosselklappenstutzens 10 zeigt Figur 2 schematisch im Detail. Der vom Kunststoff 46 umgebene Sensor 40 ist in dieser Draufsicht des Deckels 50 von innen nicht erhaben dargestellt, da er sich dem Betrachter zugewendet aus der Ebene heraus erhebt. Von dem Sensor 40 verlaufen elektrische Verbindungen zu einem in dem Deckel 50 angeordneten elektrischen Kontakt 66. Über diesen Kontakt 66 ist der Sensor 40 mit der außerhalb des Drosselklappenstutzens 10 angeordneten Steuereinheit 28 verbindbar. Gleichzeitig ist der Sensor 40 über den elektrischen Kontakt 66 mit elektrischer Energie versorgbar. Weiterhin weist der Deckel 50 Zentrierhilfen 68 auf, über die der Deckel relativ zu dem Gehäuse 12 des Drosselklappenstutzens 10 und damit der Sensor 40 relativ zu dem auf der Drosselklappenwelle 18 angeordneten Magneten 34 positionierbar ist.

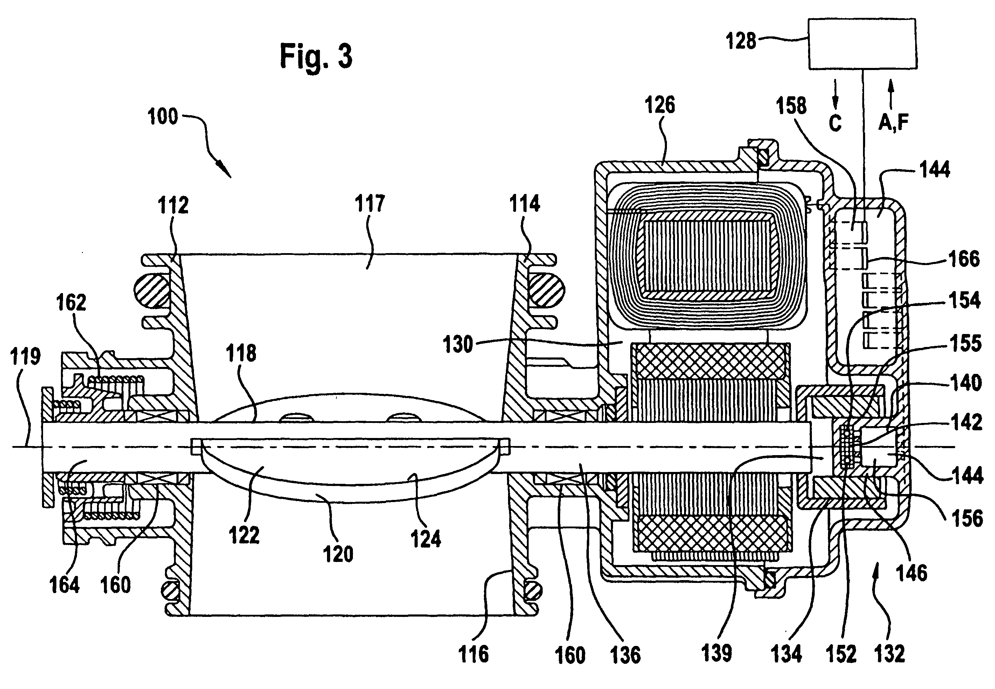

Der Drosselklappenstutzen 100 gemäß Figur 3 ist in gleicher Weise wie der Drosselklappenstutzen 10 gemäß Figur 1 in einem Kraftfahrzeug einsetzbar.

Der Drosselklappenstutzen 100 umfasst ein Gehäuse 112, in dem eine durchgehende Drosselöffnung 116 angeordnet ist. Die Drosselöffnung 116 weist einen annähernd zylinderförmigen Querschnitt 117 auf. In der Drosselöffnung 116 ist auf einer Drosselklappenwelle 118, die eine Drehachse 119 aufweist, eine Drosselklappe 120 angeordnet.

Die Drosselklappenwelle 118 ist von einem in einem Antriebsgehäuse 126 angeordneten und über eine außerhalb des Gehäuses 112 angeordnete Steuereinheit 128 ansteuerbaren elektrischen Stellantrieb 130 direkt verstellbar. Hierdurch unterscheidet sich der Drosselklappenstutzen 100 gemäß Figur 3 von dem Drosselklappenstutzen 10 gemäß Figur 1, bei dem die Drosselklappenwelle von dem Stellantrieb 30 indirekt über ein Getriebe 31 antreibbar ist. Der Stellantrieb 130 ist dabei als kommutierter Elektromotor ausgebildet.

Auch die Drehbewegung der Drosselklappenwelle 118 des Drosselklappenstutzens 100 ist von einer Positionserfassungseinrichtung 132 erfassbar. Die Positionserfassungseinrichtung 132 umfasst einen Magneten 134, der an einem ersten Ende 136 der Drosselklappenwelle 118 angeordnet ist. Im Zentrum 139 des Magneten 134 ist in einer Flucht mit der Drehachse 119 der Drosselklappenwelle 118 ein Sensor 140 angeordnet. Der Sensor 140 umfasst ein erstes Gehäuse 142 und ein zweites Gehäuse 144. Der Sensor 140 ist annähernd vollständig von Kunststoff 146 ummantelt. Das erste Gehäuse 142 des Sensors 40 ist in einem rechten Winkel zu dem zweiten Gehäuse 144 des Sensors 40 angeordnet. Der mit Kunststoff 146 ummantelte Sensor 140 ist als Vorspritzling in den Deckel 150 des Drosselklappenstutzens 100 integriert worden, als dieser im Spritzgussverfahren hergestellt worden ist.

Der Sensor 140 umfasst in seinem ersten Gehäuse 142 ein erstes magnetoresistives Sensorelement 152 und ein zweites magnetoresistives Sensorelement 154 sowie einen Temperatursensor 155. In dem zweiten Gehäuse 144 des Sensors 140 ist eine Auswerteelektronik 156 angeordnet. Die Auswerteelektronik 156 umfasst einen Pin 158, über den die Auswerteelektronik 156 zur Einstellung der Kennlinie über ein serielles Protokoll einstellbar ist. Der Pin 158 endet nicht in dem als Gerätestecker ausgebildeten elektrischen Kontakt 166, sondern wird nur im Fertigungsprozess kontaktiert und danach verschlossen.

Die Drosselklappenwelle 180 ist in Lagern 160 gelagert. Der Drosselklappenstutzen 100 weist weiterhin ein Federsystem 162 auf, das an dem der Positionserfassungseinrichtung 132 angewandten Ende 164 der Drosselklappenwelle 118 angeordnet ist. Über dieses Federsystem 162 ist die Drosselklappenwelle 118 bei einem Ausfall des Stellantriebs 130 in eine Notlaufstellung positionierbar.

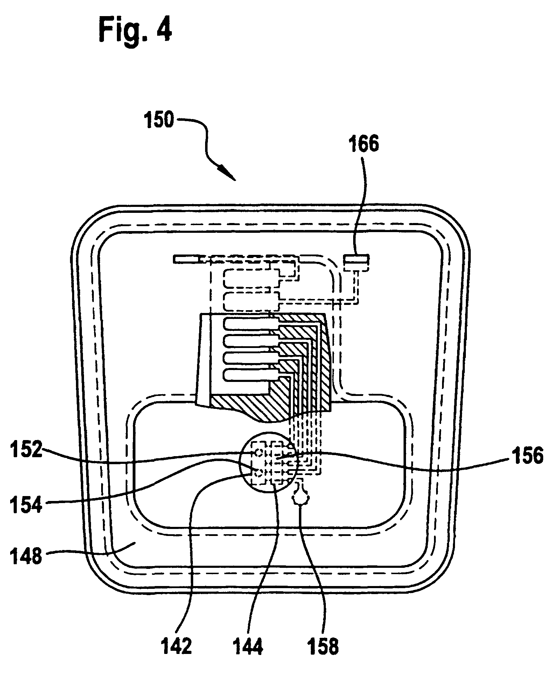

Der Deckel 150 des Drosselklappenstutzens 100 ist im Detail in Figur 4 dargestellt. Der aus Kunststoff 148 gefertigte Deckel 150 umfasst das sowohl das erste Gehäuse 142 als auch das zweite Gehäuse 144 des Sensors 140 annähernd vollständig. Aus der Zeichnungsebene der Figur 4 ragt das zweite Gehäuse 144 des Sensors 140 heraus, was auf Grund der Draufsicht des Deckels nicht erhaben dargestellt ist. Deutlich erkennbar sind die Pins der Auswerteelektronik 156 des zweiten Gehäuses 144 des Sensors 140, mit dem die Auswerteelektronik 156 mit einer in der Zeichnung nicht näher dargestellten Steuereinheit verbindbar ist.

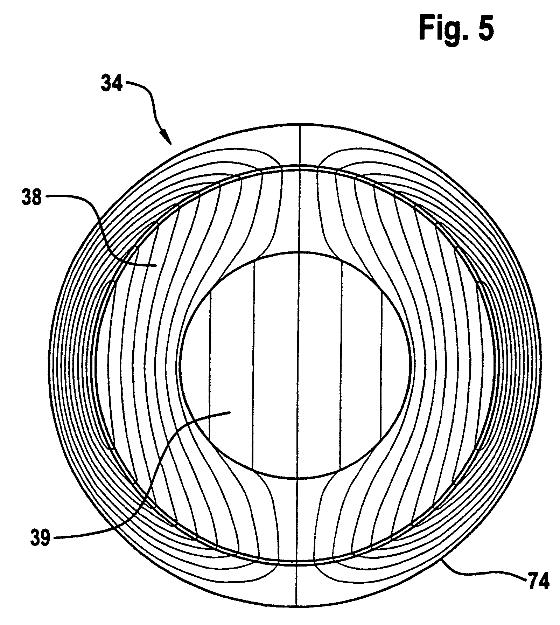

Die Ausgestaltung des Magneten 34 des Drosselklappenstutzens 10 zeigt Figur 5 im Detail. Deutlich erkennbar sind die diametralen Feldlinien des als Ring 38 ausgebildeten Magneten 34 des Drosselklappenstutzens 10. Der Ring 38 ist dabei von einem Abschirmring 74 umgeben. Die Feldlinien wandern dabei annähernd waagerecht durch das Zentrum 39 des als Ring 38 ausgebildeten Magneten 34 hindurch. Das Zentrum 39 ist frei von magnetischem Material. In dem Bereich des Zentrums 39 ist der Sensor 40 positionierbar.

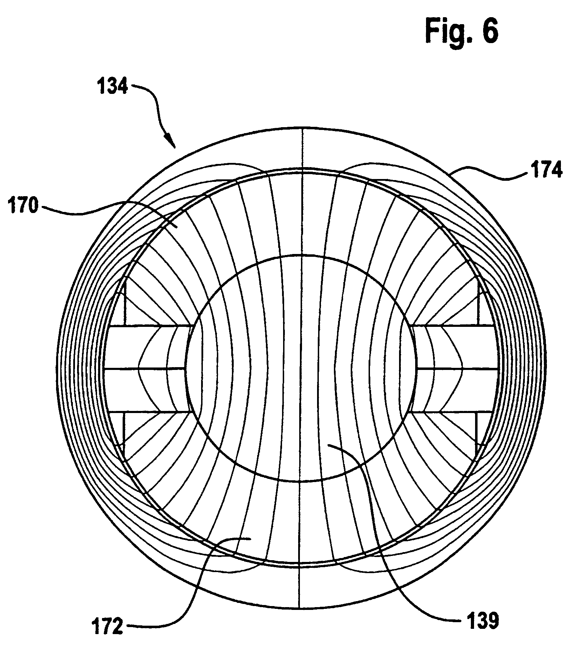

Im Gegensatz dazu ist der Magnet 134 des Drosselklappenstutzens 100 radial magnetisiert, was in Figur 6 zu sehen ist. Hierzu weist der Magnet 134 ein erstes Ringteilsegment 170 und ein zweites Ringteilsegment 172 auf. Die Feldlinien sind bei dem Magneten 134 mit radialer Magnetisierung deutlich stärker im Zentrum fokussiert, als bei dem Magneten 34 mit diametraler Magnetisierung des Drosselklappenstutzens 10. Der Magnet 134 weist ebenso wie der Magnet 34 einen Abschirmring 174 auf. Im Zentrum 139 des Magneten 134 ist wiederum kein magnetisches Material angeordnet. In diesem Bereich ist der Sensor 140 positionierbar.

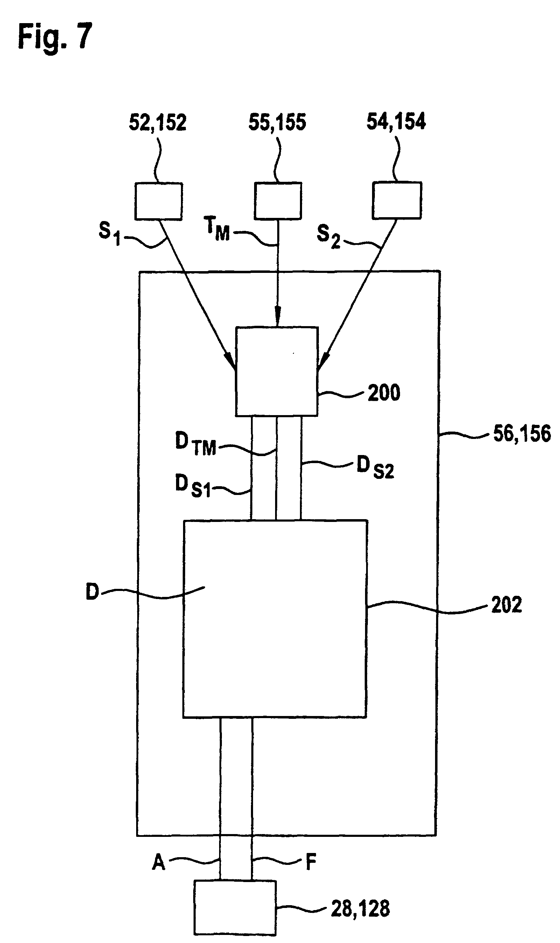

Sowohl die Positionserfassungseinrichtung 32 des Drosselklappenstutzens 10 als auch die Positionserfassungseinrichtung 132 des Drosselklappenstutzens 100 sind nach dem gleichen Verfahren zu betreiben, was in Figur 7 schematisch dargstellt ist.

Bei diesem Verfahren sind das erste Sensorelement 52 bzw. 152 und das zweite Sensorelement 54 bzw. 154 um eine viertel Periode gegeneinander versetzt. Damit sind beim Betrieb des Drosselklappenstutzens 10 bzw. 100 zwei Signale $S_1$ und $S_2$ erfassbar. Das erste Signal $S_1$ ist annähernd sinusförmig und wird von dem ersten Sensorelement 52 bzw. 152 geliefert. Das zweite Signal $S_2$ ist annähernd cosinusförmig und wird von dem zweiten Sensorelement 54 bzw. 154 geliefert. Außerdem wird ständig über den Temperatursensor 55 bzw. 155 ein Temperatursignal $T_M$ geliefert. Die beiden Signale $S_1$ und $S_2$ sowie das Temperatursignal $T_M$ gelangen über nicht näher dargestellte elektrische Verbindungsmittel in das zweite Gehäuse 44 bzw. 144 des Sensors 40 bzw. 140. In dem Gehäuse 44 bzw. 144 werden sie der Auswerteelektronik 56 bzw. 156 zugeführt.

Die Auswerteelektronik 56 bzw. 156 digitalisiert mittels einer Digitalisierungseinrichtung 200 das erste Signal $S_1$, das zweite Signal $S_2$ und das Temperatursignal $T_M$. Dabei wird aus dem ersten Signal $S_1$ das digitale Signal $D_{S1}$, aus dem zweiten Signal $S_2$ das digitale Signal $D_{S2}$ und aus dem Temperatursignal $T_M$ das digitale Signal $D_{TM}$ erzeugt. Die drei digitalen Signale $D_{S1}$, $D_{S2}$ und $D_{TM}$ werden dann einer ebenfalls in der Auswerteelektronik 56 bzw. 156 angeordneten Recheneinheit 202 zugeführt. Die Recheneinheit 202 umfasst einen Speicher und eine Vergleichseinheit, die beide in der Zeichnung nicht näher dargestellt sind.

In der Recheneinheit 202 wird aus dem ersten digitalen Signal $D_{S1}$ und dem zweiten digitalen Signal $D_{S2}$ als Positionssignal ein annähernd arcustangensförmiges Signal P erzeugt. Das Positionssignal P wird in der Vergleichseinheit mit Daten aus dem Speicher verglichen. Die Daten des Speichers 206 umfassen dabei sowohl Korrekturwerte (Brückenoffsets) der Sensorelemente 52, 152 bzw. 54, 154, die zur korrekten Berechnung der Winkelstellung der Drosselklappenwelle notwendig sind, als auch Kennlinienparameter für die Ausgangskennlinie, wie beispielsweise Steigung und Winkeloffset. Aus diesem Vergleich zwischen dem annähernd arcustangensförmigen Signal P und den Daten des Speichers 206 lässt sich die aktuelle Position der Drosselklappenwelle 18 bzw. 118 bestimmen. Die aktuelle Position der Drosselklappenwelle 18 bzw. 118 ist als Ausgabesignal A der Steuereinheit 28 bzw. 128 zuführbar. Die Steuereinheit 28 bzw. 128 gibt in Abhängigkeit von dem Ausgabesignal A der Auswerteelektronik 56 bzw. 156 ein Steuersignal C ab, das dem Stellantrieb 30 bzw. 130 übermittelt wird und über das in Abhängigkeit von der aktuell erfassten Position der Drosselklappenwelle 18 bzw. 118 der Stellantrieb 30 bzw. 130 ansteuerbar ist.

Bei der Durchführung dieses Verfahrens findet zyklisch, also in regelmäßigen Zeitabständen, in der Auswerteelektronik 56, 156 eine Plausibilisierung der Signale $S_1$ und $S_2$ des ersten Sensorelements 52 bzw. 152 und des zweiten Sensorelements 54 bzw. 154 unter Berücksichtigung des gemessenen Temperatursignals $T_M$ statt. Die beiden Signale $S_1$ und $S_2$ der Sensorelemente 52 bzw. 152 und 54 bzw. 154 folgen dabei annähernd den Funktionen:

$$S_1 = S_{1max} * \sin(2 * \Phi) * [1 + \alpha_1 * (T_{M1} - T_R)]$$

sowie

$$S_2 = S_{2max} * \cos(2 * \Phi) * (1 + \alpha_2 * (T_{M2} - T_R)).$$

| | |
|---|---|
| $S_{1max}$ und $S_{2max}$ | Amplituden der Signale in der Einheit mV, |
| $\Phi$ | mechanischer Winkel, um den sich die Drosselklappenwelle 18,118 gedreht hat, |
| $\alpha_1$, $\alpha_2$ | Temperaturkoeffizienten in der Einheit |
| $1/K$, $T_R$ | Referenztemperatur |

Der Amplitudentemperaturgang der Signale $S_1$ und $S_2$ wird dabei durch die Differenz zwischen der gemessenen und der Referenztemperatur berücksichtigt. Die Referenztemperatur ist üblicherweise Raumtemperatur.

Da beide Sensorelemente 52, 54 bzw. 152, 154 auf dem gleichen Substrat aufgebaut sind, kann zur Temperaturmessung ein einziger Temperatursensor eingesetzt werden, der die gemessene Temperatur $T_M$ liefert. Entsprechend können auch die Temperaturkoeffizienten gleichgesetzt werden:

$$T_{M1} = T_{M2} = T_M,$$

$$\alpha_1 = \alpha_2 = \alpha.$$

Durch diese Gleichungen sind die Signale $S_1$ und $S_2$ charakterisiert. Bei fehlerfreier Funktion muss gelten:

$$\sin^2 (2\Phi) + \cos^2 (2\Phi) = 1.$$

Diese Bedingung wird zusätzlich in der Recheneinheit 202 zyklisch abgefragt. Bei Verletzung dieser Bedingung wird ein Signal F ausgegeben, welches erkennbar außerhalb des normalen Arbeitsbereiches liegt. Auch dieses Signal F ist in nicht näher dargestellter Weise der ebenfalls in der Zeichnung nicht näher dargestellten Steuereinheit zuführbar. Durch diese Sicherheitsfunktion kann auf eine redundante Ausführung verzichtet werden, wodurch die Positionserfassungseinrichtung 32 bzw. 132 einen besonders einfachen Aufbau aufweist. Zudem werden aus Kompatibilitätsgründen und um Fehler in der Übertragungsstrecke erkennen zu können, zwei komplementäre Kennlinien ausgegeben. Durch die Berücksichtigung der Temperaturinformation erfolgt die Plausibilisierung zuverlässig in einem Temperaturbereich von beispielsweise -40° bis +140°C.

Das Verfahren zeichnet sich dadurch aus, dass mittels eines magnetoresistiven Sensors 40 bzw. 140, der ein erstes magnetoresistives Sensorelement 152 bzw. 52 und ein zweites magnetoresistives Sensorelement 54 bzw. 154 aufweist, zwei zueinander phasenverschobene Signale $S_1$ und $S_2$ erzeugbar sind. Mittels dieser beiden Signale $S_1$ und $S_2$ ist die aktuelle Position der Drosselklappenwelle 18 bzw. 118 ausreichend genau erfassbar. Dabei ist auch bei einer besonders langen Btriebsdauer des Verfahrens besonders zuverlässig gewährleistet, dass die Einrichtung keine mechanischen Verschleißerscheinungen aufweist.

**Patentansprüche**

1. Verfahren zur berührungslosen Erfassung der Position einer Drosselklappenwelle (18, 118) eines Drosselklappenstutzens (10, 100), wobei der Drosselklappenstutzen (10, 100) ein von einem Deckel (50, 150) verschließbares Gehäuse (12, 112) und eine in dem Gehäuse (12, 112) angeordnete Drosselöffnung (16, 116) für eine auf der Drosselklappenwelle (18, 118) angeordnete Drosselklappe (20, 120) aufweist, wobei die Droselklappenwelle (18, 118) von einem elektrischen Stellantrieb (30, 130) antreibbar ist und an ihrem einen Ende (36, 136) einen Magnet (34, 134) aufweist, der in einer Flucht berührungslos zu einem an dem Deckel (50, 150) angeordneten Sensor (40, 140) angeordnet ist, **dadurch gekennzeichnet, dass** der Sensor (40, 140) ein erstes magnetoresistives Sensorelement (52, 152) und ein zweites magnetoresistives Sensorelement (54, 154) aufweist, wobei mittels des Magneten (34, 134) bei einer Drehbewegung der Drosselklappenwelle (18, 118) in dem ersten magnetoresistiven Sensorelement (52, 152) ein annähernd sinusförmiges Signal ($S_1$) und in dem zweiten magnetoresistiven Sensorelement (54, 154) ein annähernd cosinusförmiges Signal ($S_2$) erzeugt wird, wobei das erste annähernd sinusförmige Signal ($S_1$) und das zweite annähernd cosinusförmige Signal ($S_2$) einer in dem Sensor (40, 140) angeordneten Auswerteelektronik (56, 156) zugeführt werden, wobei in der Auswerteelektronik (56, 156) aus dem annähernd sinusförmigen Signal ($S_1$) des ersten magnetoresistiven Sensorelements (52, 152) und dem annähernd cosinusförmigen Signal ($S_2$) des zweiten magnetoresistiven Sensorelements (54, 154) ein annähernd arcustangensförmiges Signal (P) erzeugt wird, wobei in Abhängigkeit von dem annähernd arcustangensförmigen Signal (P) in einer außerhalb des Gehäuses () angeordneten Steuereiheit (28) ein Steuersignal (C) erzeugt wird und das Steuersinal (C) dem in dem Drossel-. klappenstutzen (10, 100) angeordneten Stellantrieb (30, 130) zur Verstellung der Drosselklappenwelle (18, 118) zugeführt wird.

2. Verfahren nach Anspruch 1 **dadurch gekennzeichnet, dass** die Skalierung des Ausgangssignals A des Sensors 40, 140 mittels eines zusätzlichen Pins (158) der Auswerteelektronik (56, 156) über ein serielles Protokoll vorgenommen wird, wobei Daten zur Einstellung der Kennlinie in einem nichtflüchtigen Speicher abgelegt werden.

3. Verfahren nach Anspruch 1 oder 2 **dadurch gekennzeichnet, dass** zyklisch das Signal des ersten magnetoresistiven Sensorelements (52, 152) mit dem Signal des zweiten magnetoresistiven Sensorelements (54, 154) plausibilisiert wird.

4. Drosselklappenstutzen (10, 100) mit einem von einem Deckel (50, 150) verschließbaren Gehäuse (12, 120) und mit einer in dem Gehäuse (12, 120) angeordneten Drosselöffnung (16, 116) für eine auf

15     **EP 1 404 957 B1**     16

einer Drosselklappenwelle (18, 118) angeordnete Drosselklappe (20, 120), wobei die Drosselklappenwelle (18, 118) von einem elektrischen Stellantrieb (30, 130) antreibbar ist und an ihrem einen Ende (36, 136) einen Magneten (34, 134) aufweist, der in einer Flucht berührungslos zu einem an dem Deckel (50, 150) angeordneten Sensor (40, 140) angeordnet ist, **dadurch gekennzeichnet, dass** der Magnet (34) annähernd ringförmig ausgebildet ist und der Sensor (40, 140) ein erstes magnetoresistives Sensorelement (52, 152) und ein zweites magnetoresistives Sensorelement (54, 154) aufweist, so dass mittels des Magneten (34, 134) bei einer Drehbewegung der Drosselklappenwelle (18, 118) in dem ersten magnetoresistiven Sensorelement (52, 152) ein annähernd sinusförmiges Signal ($S_1$) und in dem zweiten magnetoresistiven Sensorelement (54, 154) ein annähernd cosinusförmiges Signal ($S_2$) erzeugt wird und dass die beiden Sensorelemente (52, 152) zur Erzeugung eines annähernd arcustangensförmigen Signals (P) mit einer Auswerteelektronik (56, 156) verbunden sind und dass die Auswerteelektronik (56, 156) zur Erzeugung eines Steuersignals (C) für den Stellantrieb (30, 130) mit einer außerhalb des Gehäuses (12) angeordneten Steuereinheit (28) Verbindung hat.

5. Drosselklappenstutzen nach Anspruch 4, **dadurch gekennzeichnet, dass** der Magnet (34, 134) eine diametrale Magnetisierung aufweist.

6. Drosselklappenstutzen (100) nach Anspruch 4, **dadurch gekennzeichnet, dass** der Magnet (134) ein erstes Ringteilsegment (170) und ein zweites Ringteilsegment (172) umfasst und sowohl das erste Ringteilsegment (170) als auch das zweite Ringteilsegment (172) radial magnetisiert sind.

7. Drosselklappenstutzen nach Anspruch 4 oder 5, **dadurch gekennzeichnet, dass** der Sensor (40, 140) axial mittig in den Magneten (34, 134) hineinragt.

8. Drosselklappenstutzen nach Anspruch 7, dadurch gekenzeichnet, dass der Sensor (40, 140) ein erstes und ein zweites Gehäuse (42, 142 u. 44, 144) umfasst, wobei in dem ersten Gehäuse (42, 142) das erste Sensorelement (52, 152) sowie das zweite Sensorelement (54, 154) und in dem zweiten Gehäuse (44, 144) die Auswerteelektronik (56, 156) angeordnet ist, wobei das erste Gehäuse (42, 142) annähernd senkrecht zu der Drosselklappenwelle (18, 118) und das zweite Gehäuse (44, 144) annähernd parallel zu der Drosselklappenwelle (18, 118) angeordnet ist.

9. Drosselklappenstutzen nach Anspruch 8, **dadurch gekennzeichnet, dass** die Auswerteelektronik zur Einstellung der Kennlinie über ein serielles Protokoll einen Pin (58, 158) umfasst.

10. Drosselklappenstutzen nach einem der Ansprüche 4 bis 9, **dadurch gekennzeichnet, dass** der Sensor (40, 140) annähernd vollständig von Kunststoff (46, 146) umgeben ist.

11. Drosselklappenstutzen nach Anspruch 10, **dadurch gekennzeichnet, dass** der Deckel (50, 150) des Gehäuses (12, 112) aus Kunststoff (48, 148) ist und der Sensor (40, 140) von dem Kunststoff (48, 148) des Deckels (50, 150) zumindest teilweise umschlossen ist.

## Claims

1. Method for the contactless detection of the position of a butterfly valve shaft (18, 118) of a butterfly valve connecting piece (10, 100), the butterfly valve connecting piece (10, 100) having a housing (12, 112) which can be closed off by a lid (50, 150), and a throttle orifice (16, 116) which is arranged in the housing (12, 112), for a butterfly valve (20, 120) which is arranged on the butterfly valve shaft (18, 118), the butterfly valve shaft (18, 118) being capable of being driven by an electric actuator drive (30, 130) and having, at one of its ends (36, 136), a magnet (34, 134) which is arranged in contactless alignment with a sensor (40, 140) which is arranged on the lid (50, 150), **characterized in that** the sensor (40, 140) has a first magnetoresistive sensor element (52, 152) and a second magnetoresistive sensor element (54, 154), an approximately sinusoidal signal ($S_1$) being generated in the first magnetoresistive sensor element (52, 152) and an approximately cosinusoidal signal ($S_2$) being generated in the second magnetoresistive sensor element (54, 154) by means of the magnet (34, 134) when there is rotational movement of the butterfly valve shaft (18, 118), the first approximately sinusoidal signal ($S_1$) and the second approximately cosinusoidal signal ($S_2$) being fed to evaluation electronics (56, 156) which are arranged in the sensor (40, 140), an approximately arctan-shaped signal (P) being generated in the evaluation electronics (56, 156) from the approximately sinusoidal signal ($S_1$) of the first magnetoresistive sensor element (52, 152) and the approximately cosinusoidal signal ($S_2$) of the second magnetoresistive sensor element (54, 154), a control signal (C) being generated as a function of the approximately arctan-shaped signal (P) in a control unit (28) which is arranged outside the housing (12, 112), and the control signal (C) being fed to the actuator drive (30, 130), arranged in the butterfly valve connecting piece (10, 100), in order to adjust the butterfly valve shaft (18, 118).

9

**2.** Method according to Claim 1, **characterized in that** the output signal A of the sensor (40, 140) is scaled by means of an additional pin (158) of the evaluation electronics (56, 156) using a serial protocol, data for setting the characteristic curve being stored in a nonvolatile memory.

**3.** Method according to Claim 1 or 2, **characterized in that** the signal of the first magnetoresistive sensor element (52, 152) is cyclically subjected to plausibility checking using the signal of the second magnetoresistive sensor element (54, 154).

**4.** Butterfly valve connecting piece (10, 100) having a housing (12, 120) which can be closed off by a lid (50, 150), and having a throttle orifice (16, 116) which is arranged in the housing (12, 120), for a butterfly valve (20, 120) which is arranged on a butterfly valve shaft (18, 118), the butterfly valve shaft (18, 118) being capable of being driven by an electric actuator drive (30, 130), and having at one of its ends (36, 136) a magnet (34, 134) which is arranged in contactless alignment with a sensor (40, 140) which is arranged on the lid (50, 150), **characterized in that** the magnet (34) is of approximately ring-shaped design, and the sensor (40, 140) has a first magnetoresistive sensor element (52, 152) and a second magnetoresistive sensor element (54, 154) so that an approximately sinusoidal signal ($S_1$) is generated in the first magnetoresistive sensor element (52, 152) and an approximately co-sinusoidal signal ($S_2$) is generated in the second magnetoresistive sensor element (54, 154) by means of the magnet (34, 134) when there is a rotary movement of the butterfly valve shaft (18, 118), and **in that** the two sensor elements (52, 152) for generating an approximately arctan-shaped signal (P) are connected to evaluation electronics (56, 156), and **in that** the evaluation electronics (56, 156) are connected to a control unit (28) arranged outside the housing (12), in order to generate a control signal (C) for the actuator drive (30, 130).

**5.** Butterfly valve connecting piece according to Claim 4, **characterized in that** the magnet (34, 134) has diametric magnetization.

**6.** Butterfly valve connecting piece (100) according to Claim 4, **characterized in that** the magnet (134) comprises a first ring part segment (170) and a second ring part segment (172), and both the first ring part segment (170) and the second ring part segment (172) are radially magnetized.

**7.** Butterfly valve connecting piece according to Claim 4 or 5, **characterized in that** the sensor (40, 140) projects axially and centrally into the magnet (34, 134).

**8.** Butterfly valve connecting piece according to Claim 7, **characterized in that** the sensor (40, 140) comprises a first and a second housing (42, 142 and 44, 144), the first sensor element (52, 152) and the second sensor element (54, 154) being arranged in the first housing (42, 142), and the evaluation electronics (56, 156) being arranged in the second housing (44, 144), the first housing (42, 142) being arranged approximately perpendicularly to the butterfly valve shaft (18, 118), and the second housing (44, 144) being arranged approximately parallel to the butterfly valve shaft (18, 118).

**9.** Butterfly valve connecting piece according to Claim 8, **characterized in that** the evaluation electronics comprise a pin (58, 158) in order to set the characteristic curve using a serial protocol.

**10.** Butterfly valve connecting piece according to one of Claims 4 to 9, **characterized in that** the sensor (40, 140) is surrounded virtually completely by plastic (46, 146).

**11.** Butterfly valve connecting piece according to Claim 10, **characterized in that** the lid (50, 150) of the housing (12, 112) is made of plastic (48, 148), and the sensor (40, 140) is at least partially enclosed by the plastic (48, 148) of the lid (50, 150).

**Revendications**

**1.** Procédé permettant de détecter sans contact la position d'un arbre de clapet de régulation (18, 118) d'un manchon à clapet de régulation (10, 100), où le manchon à clapet de régulation (10, 100) comporte un carter (12, 112) pouvant être fermé par un couvercle (50, 150) et une ouverture de régulation (16, 116), disposée dans le carter (12, 112), dans laquelle se trouve un clapet de régulation (20, 120) monté sur l'arbre du clapet de régulation (18, 118), où l'arbre du clapet de régulation (18, 118) peut être entraîné par un entraînement électrique de réglage (30, 130) et comporte, à l'une de ses extrémités (36, 136), un aimant (34, 134) disposé en alignement et sans contact avec un capteur (40, 140) monté sur le couvercle (50, 150) **caractérisé par le fait que** le capteur (40, 140) comporte un premier élément capteur magnétorésistif (52, 152) et un deuxième élément capteur magnétorésistif (54, 154), où, au moyen de l'aimant (34, 134), lors d'un mouvement rotatif de l'arbre de clapet de régulation (18, 118), un signal approximativement sinusoïdal ($S_1$) est généré dans le premier élément capteur magnétorésistif (52, 152) et un signal approximativement co-sinusoïdal ($S_2$) est généré dans le deuxième élément capteur magnétorésistif (54, 154), où le premier signal approximativement sinusoïdal ($S_1$) et le

deuxième signal approximativement cosinusoïdal ($S_2$) sont appliqués à un système électronique d'évaluation (56, 156) disposé dans le capteur (40, 140), où, dans le système électronique d'évaluation (56, 156), on génère, à partir du signal approximativement sinusoïdal ($S_1$) du premier élément capteur magnétorésistif (52, 152) et du signal approximativement cosinusoïdal ($S_2$) du deuxième élément capteur magnétorésistif (54, 154), un signal (P) approximativement en forme d'Arc tangente, où, en fonction du signal (P) approximativement en forme d'Arc tangente, on génère, dans une unité de commande (28) disposée à l'extérieur du carter (12, 112), un signal de commande (C) et le signal de commande (C) est appliqué à l'entraînement de réglage (30, 130) disposé dans le manchon à clapet de régulation (10, 100) pour le réglage de l'arbre de clapet de régulation (18, 118).

2. Procédé selon la revendication 1 **caractérisé par le fait que** le c adrage d u signal de sortie A du capteur (40, 140) est effectué au moyen d'une broche supplémentaire (158) du système électronique d'évaluation (56, 156) et par l'intermédiaire d'un protocole sériel, des données relatives au réglage de la caractéristique étant stockées dans une mémoire non volatile.

3. Procédé selon la revendication 1 ou 2 **caractérisé par le fait que**, cycliquement, le signal du premier élément capteur magnétorésistif (52, 152) est comparé quant à sa plausibilité au signal du deuxième élément capteur magnétorésistif (54, 154).

4. Manchon à clapet de régulation (10, 100) comportant un carter (12, 112) pouvant être fermé par un couvercle (50, 150) et une ouverture de régulation (16, 116), disposée dans le carter (12, 112), dans laquelle se trouve un clapet de régulation (20, 120) monté sur un arbre de clapet de régulation (18, 118), où l'arbre de clapet de régulation (18, 118) peut être entraîné par un entraînement électrique de réglage (30, 130) et comporte, à l'une de ses extrémités (36, 136), un aimant (34, 134) disposé en alignement et sans contact avec un capteur (40, 140) monté sur le couvercle (50, 150) **caractérisé par le fait que** l'aimant (34) est approximativement en forme d'anneau et que le capteur (40, 140) comporte un premier élément capteur magnétorésistif (52, 152) et un deuxième élément capteur magnétorésistif (54, 154) si bien que, au moyen de l'aimant (34, 134), lors d'un mouvement rotatif de l'arbre de clapet de régulation (18, 118), un signal approximativement sinusoïdal ($S_1$) est généré dans le premier élément capteur magnétorésistif (52, 152) et un signal approximativement cosinusoïdal ($S_2$) est généré dans le deuxième élément capteur magnétorésistif (54, 1 54), et q ue les deux éléments capteurs (52, 152) sont reliés à un système électronique d'évaluation (56, 156) destiné à la production d'un signal (P) approximativement en forme d'Arc tangente et que le système électronique d'évaluation (56, 156) est en liaison, pour la production d'un signal de commande (C) destiné à l'entraînement de réglage (30, 130), avec une unité de commande (28) disposée à l'extérieur du carter (12).

5. Manchon à clapet de régulation selon la revendication 4 **caractérisé par le fait que** l'aimant (34, 134) a une magnétisation diamétrale.

6. Manchon à clapet de régulation selon la revendication 4 **caractérisé par le fait que** l'aimant (34, 134) comprend un premier segment partiel d'anneau (170) et un deuxième segment partiel d'anneau (172) et que aussi bien le premier segment partiel d'anneau (170) que le deuxième segment partiel d'anneau (172) sont magnétisés radialement.

7. Manchon à clapet de régulation selon la revendication 4 ou 5 **caractérisé par le fait que** le capteur (40, 140) est engagé axialement et au milieu dans l'aimant (34, 134).

8. Manchon à clapet de régulation selon la revendication 7 **caractérisé par le fait que** le capteur (40, 140) comprend un premier et un deuxième boîtier (42, 142 et 44, 144), le premier élément capteur (52, 152), ainsi que le deuxième élément capteur (54, 154) étant montés dans le premier boîtier (42, 142) et le système électronique d'évaluation (56, 156) étant disposé dans le deuxième boîtier (44, 144), le premier boîtier (42, 142) étant disposé approximativement en angle droit avec l'arbre de clapet de régulation (18, 118) et le deuxième boîtier (44, 144) étant disposé approximativement en parallèle avec l'arbre de clapet de régulation (18, 118).

9. Manchon à clapet de régulation selon la revendication 8 **caractérisé par le fait que** le système électronique d'évaluation comporte une borne (58, 158) pour le réglage de la caractéristique par l'intermédiaire d'un protocole sériel.

10. Manchon à clapet de régulation selon l'une des revendications 4 à 9 **caractérisé par le fait que** le capteur (40, 140) est enrobé à peu près complètement de matière plastique (46, 146).

11. Manchon à clapet de régulation selon la revendication 10 **caractérisé par le fait que** le couvercle (50, 150) du carter (12, 112) est en matière plastique (48, 148) et que le capteur (40, 140) est enrobé au moins partiellement par la matière plastique (48, 148) du couvercle (50, 150).

EP 1 404 957 B1

Fig. 1

12

# Fig. 2

Fig. 3

EP 1 404 957 B1

# Fig. 4

**Fig. 5**

**Fig. 6**

# Fig. 7